Europäisches Patentamt

European Patent Office

Office européen des brevets

(11) Publication number: **0 196 784**
**A2**

# (12) EUROPEAN PATENT APPLICATION

(21) Application number: **86301450.2**

(22) Date of filing: **28.02.86**

(51) Int. Cl.⁴: **G 01 L 9/00**

(30) Priority: **14.03.85 GB 8506589**

(43) Date of publication of application:
**08.10.86 Bulletin 86/41**

(84) Designated Contracting States:
**AT BE CH DE FR GB IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Cox, Eric Reginald**
**5 Starling Close**
**Farndon Cheshire CH3 6RF(GB)**

(72) Inventor: **Smith, Desmond Ernest**
**63 St. Mary's Road Halton Village**
**Runcorn Cheshire WA7 2BW(GB)**

(74) Representative: **Hall, David Brian et al,**
**Imperial Chemical Industries PLC Legal Department:**
**Patents Po Box 6**
**Welwyn Garden City Herts, AL7 1HD(GB)**

(54) Optical pressure sensor with diaphragm.

(57) An optical pressure sensor comprises a resiliently flexible diaphragm and a rigid transparent cover plate mounted substantially parallel to the diaphragm and spaced therefrom by a collar so as to form a cavity between them. The opposing surfaces of the plate and diaphragm within the cavity are reflective, and form between them a Fabry Perot cavity, with the transparent cover plate enabling light to enter and escape from the cavity. The pressure to be sensed is applied to the diaphragm to cause it to flex and consequently to vary the Fabry Perot interference pattern according to changes in the pressure. The cavity is very thin, e.g. less than 1 micron between diaphragm and cover plate, and this can be formed cheaply by manufacturing the diaphragm from semi-conductor material such as silicon, and etching it to form the cavity.

FIG 1

PRESSURE SENSOR

The invention relates to pressure sensors, and especially to the provision of cheap but robust pressure sensors suitable for use in optical systems for monitoring and controlling equipment and chemical processes.

Under the bonnet of an automobile, and on chemical and other industrial plants, fibre optic sensor systems offer significant advantages over their conventional electrical counterparts, such as immunity from crosstalk, electrical isolation of the sensor and receiver with consequent elimination of ground loop and short circuit fault conditions, and inherent safety in the event of leakage or spillage of fuel or inflammable solvents. However, sensors previously used for providing an electrical signal in response to an applied pressure or change in pressure are not suitable directly for providing a corresponding optical signal. Similarly the current trend towards intelligent or automated control and operation of domestic appliances, e.g. washing machines and dishwashers giving rise to hot humid and vibratory conditions and electromagnetic interference within and outside the appliance, could benefit from an availability of cheap, robust, optical sensors.

According to the present invention, we provide a pressure sensor comprising a resiliently flexible diaphragm and a rigid transparent cover plate mounted substantially parallel to the diaphragm and spaced therefrom by a collar which is integral with one of them and secured against the other, thereby to define between the plate and the diaphragm a cavity bounded by the collar with the diaphragm and the cover plate each having an inner surface within the cavity and an outer surface outside the cavity, the two opposed inner surfaces being reflective thereby to form a reflective Fabry Perot cavity with the transparent cover plate enabling light to enter and escape from the cavity and the sensor being adapted to receive on the outer surface of the diaphragm the fluid whose pressure is to be sensed thereby to cause flexing of the diaphragm and consequential variation in the Fabry Perot interference according to changes in the pressure.

Pressure applied to the outer surface of the flexible diaphragm will generally tend to cause it to curve evenly into the cavity when the diaphragm is supported evenly around its periphery. When the curve becomes distorted, interpretation of the observed variations in the Fabry Perot interference become more difficult. We find we can obtain very reproducible results by using a sensor wherein the diaphragm is integral with and is supported by the collar formed around its periphery. When this collar is secured to a planar surface of the cover plate, the integral diaphragm can be sufficiently stably held to give uniform and reproducible flexing when the applied pressure is varied.

The cavity is preferably very slim, with our preferred spacing between the diaphragm and the plate being typically 1 micron or less, with a corresponding typical diaphragm diameter in the range 3-12 mm. Such a configuration lends itself readily to fabrication by etching techniques. Accordingly, a further aspect of the present invention provides a method of manufacturing a pressure sensor, which comprises the steps of providing a diaphragm preform of resilient material, having a first planar surface on one side and a second planar surface on the other, defining a diaphragm portion of the first surface with a collar portion extending around its periphery, etching the first surface to a substantially constant depth throughout its diaphragm portion and providing the etched diaphragm portion with a reflective inner surface, causing the etched diaphragm portion to be of a thickness which is flexible under application of the pressure thereto, providing a transparent cover plate with at least a portion having a reflective surface, securing the collar portion to the cover plate with the two reflective surfaces mutually opposed thereby to form a reflective Fabry Perot cavity with the transparent cover plate enabling light to enter and escape from the cavity, and adapting the sensor to receive the pressure to be sensed on the outer surface of the diaphragm, being the diaphragm surface remote from the cavity, whereby pressure applied to said outer surface shall cause flexing of the diaphragm and consequential variation in the Fabry Perot interference according to changes in that pressure.

The above steps do not, of course, need to be carried out in the above order, and it may be preferably, for example, to cause the etched diaphragm portion to have the required flexibility by selecting a preform of an appropriate thickness, thereby avoiding a further operation. However, as described hereinafter with reference to the drawings, our preferred sensor is shaped with a cavity on each side of the diaphragm, and it is not critical which cavity is formed first.

Etching techniques for semi-conductor materials have been well developed and refined within the electronics industry, and we find such semi-conductor materials to be particularly suitable for fabrication of the diaphragm, although the optimum material will depend on the desired application. Our preferred material for general purposes, e.g. for use in temperatures up to about 150°C, is silicon, but materials such as gallium arsenide may provide better properties at higher temperatures, e.g. up to about 250°C, but they may tend to be more expensive.

Silicon is a readily available robust material for which etching techniques suitable for manufacture of commercial articles, have already been developed sufficiently to provide very smooth etched surfaces. The reflectivity of smoothly etched silicon is typically about 30% and this can be sufficient to produce interference patterns of over 40% visibility when matched with suitably surfaced cover plates. However, we find this value can be substantially increased by increasing the reflectivity of the diaphragm inner surface to within the range 50-95%, especially the higher end of the range, e.g. 80-95%. We therefore prefer to use a sensor in which the inner surface of the diaphragm has been provided with a reflective coating, e.g. of aluminium. The selected reflectivity can be obtained by coating the surface with an appropriate thickness of the metal.

In contrast to the high reflectivity preferred for the diaphragm, we found that a cover plate having a lower reflectivity gave greater visibility of interference pattern, especially when used with a high reflectivity diaphragm. Our preferred sensor is thus one in which the inner surface of the cover plate has a reflectivity within the range 30-50%, about 40% being particularly suitable for use with a 90% reflectivity diaphragm.

The interferometer forming the heart of the present sensor provides an interference pattern superimposed onto the reflected light. This may take a variety of forms depending on cavity spacing and on the bandwidth of the light source. For a slim cavity, e.g. 0.75 microns wide, addressed by a broad band source, the pattern can be seen in the reflected spectrum as a narrow band of reduced intensity having a minimum intensity at a specific wavelength dependent on the spacing. Hence the wavelength of this intensity minimum gives a measure of the spacing and hence of the pressure applied to the diaphragm. Although the wavelength at which this minimum occurs can be determined with considerable accuracy fairly readily, the apparatus currently available tends to be disproportionately expensive in relation to the cheapness of the sensor. However if a narrow bandwidth source is used, the percentage reflected will change as the intensity minimum passes through the source waveband, and this change in intensity at a fixed wavelength can be measured using less sophisticated equipment. To compensate for any change in source intensity, we prefer to determine a ratio of intensities, using a reference waveband outside those traversed by the intensity minimum, especially where an accurate evaluation is required. Alternatively a narrow band detector can be used in similar manner.

An interesting variation is to use two narrow bandwidth sources and to arrange the dimensions of the cavity such that over the range of pressures to be measured, the wavelength of the intensity minimum in the reflected light varies from the wavelength of one source to that of the other as the pressure changes. Thus when using red and green sources, for example, at one end of the pressure range the red is reduced in intensity, leaving just the green light to be reflected. As the pressure changes, the position of the intensity minimum changes and the reflected light becomes yellow (i.e. with red and green colours being reflected with full intensity) until the green becomes reduced on further change of pressure and the reflected light appears red. Such a visual colour change can be particularly effective as a warning indicator, e.g. in a dashboard of an automobile.

A practical range of cavity widths for most purposes is from 0.4-40 microns. However for visible wavelengths the wider cavities will give multiple fringes (intensity minima), e.g. typically 1,000 fringes, and we have found not only are the narrower cavities readily reproducible using etching techniques, but that single first or second order fringes can be readily achieved in practice in this way. Movement of a single fringe can be monitored easily and cheaply as described above, and hence our preferred sensor is one in which the two opposed inner reflective surfaces are separated by a distance which produces only a single significant intensity minimum within the range of wavelengths traversed by that intensity minimum throughout the range of pressures to be sensed by the sensor. Other dimensions relevant to this criterium may include the diaphragm diameter and thickness, as these will determine the change in cavity width for a given change in pressure. However, for most applications using visible light, we prefer to use sensors whose width between reflecting surfaces lies within the range 0.5-1 micron, although under certain circumstances even narrower cavities, e.g. down to 0.3 micron, can be useful depending for example on which order fringes are being utilised.

We prefer to supply the light to the sensor from a remote source via an input optical fibre, and the light reflected from the sensor being conveyed to a detector via an output optical fibre. We prefer to supply the light to the sensor via a collimating lens, but to simplify construction such lens can be omitted at the expense of fringe contrast. In some cases, rather than using a detector and output fibre, it may be sufficient merely to allow the reflected light to escape from the cover plate of the sensor, and to observe the emitted colour directly by eye. This colour may be seen to change as the pressure changes.

The present invention enables very small and robust optical pressure sensors to be made relatively cheaply. Another advantage of this sensor is that the very low mass of the diaphragm leads to a very high frequency response characteristic, e.g. greater than 100 kHz.

To illustrate the invention specific embodiments are shown in the accompanying drawings in which

Figure 1 is a partially sectioned diagram showing the essential features of a small pressure sensor, and

Figure 2 shows a prototype sensor in more detail.

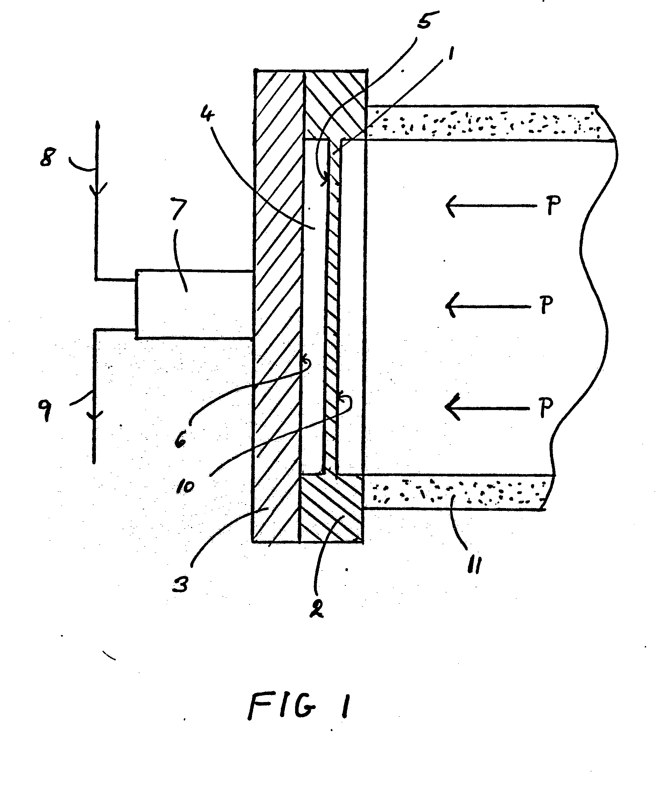

The heart of the sensor shown in Figure 1 is a flexible diaphragm 1 supported within a peripheral collar 2, the diaphragm and collar being constructed of silicon as an integral unit, and shaped by etching techniques. A transparent cover plate 3 is held against the collar so as to form a cavity 4 between the plate and the diaphragm, the collar serving to hold the plate and diaphragm in parallel spaced-apart relationship. The spacing is typically about 1 micron and the diameter of the diaphragm is suitably about 5 mm, though this may be varied to suit the range of pressures being measured.

Inside this cavity, the diaphragm's etched surface 5 is naturally reflective and the opposing surface 6 of the plate is provided with a reflective coating, thereby forming in combination a Fabry Perot interferometer, whereby light supplied through the transparent plate 3 is reflected back and forth across the cavity, to emerge from the plate 3 with one or more narrow bands of wavelengths having reduced intensity due to interference between the various reflected beams according to the well known principles of a Fabry Perot cavity. The diaphragm is flexible and provides a reflective moving element in the cavity, movement being relative to the plate and serving to change the position of the intensity minima along the wavelength scale.

The means for inputting and outputting the light are shown diagrammatically, and comprise a simple collimating lens 7 mounted on the plate 3, and connected to an input fibre 8 and output fibre 9.

The measurand is pressure P, and this is applied to the diaphragm surface 10 outside the cavity. The sensor may be fitted directly into the wall of a chamber to sense the pressure in that chamber, or it may be connected to the chamber by a conduit 11 as shown in the drawing. Apart from flexing of the diaphragm, there are no moving parts to provide a source of trouble when used in hot, humid or dusty environments. The silicon diaphragm is resistant to most corrosive environments, and can be exposed directly to most fluids whose pressures are to be measured, with impunity.

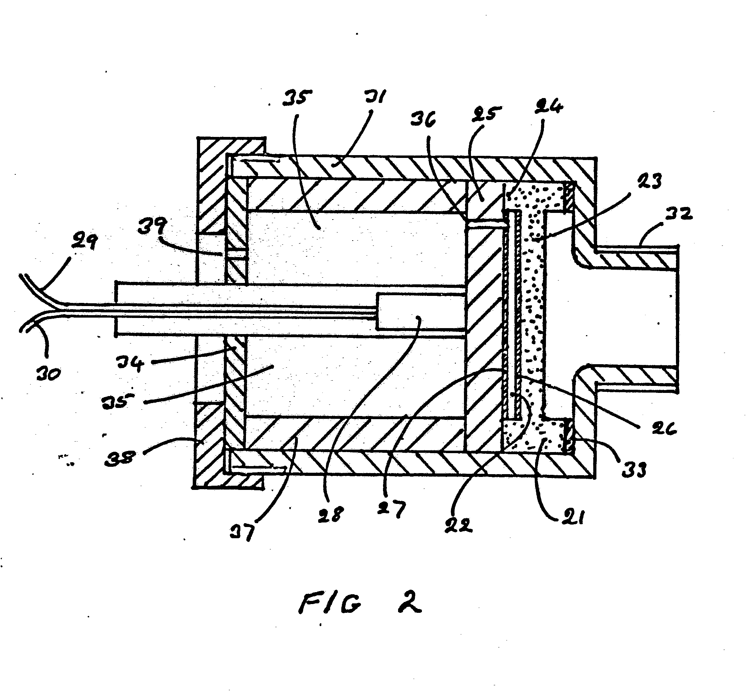

The prototype of Figure 2 provides an example of how the functional features of Figure 1 can be embodied in a practical form. This sensor is formed from a silicon wafer 21 about 1 mm thick, although thinner wafers could be used more economically. One side has a shallow depression 22, about 4 mm in diameter, etched to a uniform depth of 0.75 microns. The other side is similarly etched to give a flexible diaphragm 23 between them of uniform thickness. The thickness in this case is 0.4 mm, but this, and the diameter of the etched areas, can be varied to tune the flexibility of the diaphragm to match the range of pressures to be sensed. The unetched portion of the wafer around the depression 22 forms a collar 24 against which a rigid transparent glass cover plate 25 is secured by electrostatic bonding. The collar thus separates the rigid cover plate from the flexible diaphragm, thereby to define a cavity between them. Inside this cavity, the diaphragm's etched surface (referred to above as the inner surface) is smooth and naturally reflective, but its reflectivity has been enhanced to more than 90% by coating with a thin layer of aluminium 26. Similarly, the inner surface of the glass cover plate also has its reflectivity enhanced by a thin evaporated layer of aluminium 27, but in this case by a thinner layer to give a reflectivity of only 40%. The cavity thus provides an effective Fabry Perot cavity with the transparent cover plate enabling light to enter and escape from the cavity.

Adjacent to the outer surface of the cover plate 25 is mounted a Selfoc graded index lens 28 (Selfoc is a Registered Trade Mark) connected to input 29 and output 30 optical fibres. Light from an appropriate remote source (not shown), either broad band or comprising one or more narrow bands as described above, can be fed to the Fabry Perot cavity through the input fibre 29 and Selfoc lens, and the reflected light emerging from the cavity into the lens can be fed to a remote detector (not shown) through the output fibre 30. (A single input/output common fibre can be used but the results are generally of lower quality).

The Fabry Perot cavity and the Selfoc lens are enclosed in a protective metal case 31 having a screw-threaded port 32 dimensioned to take a standard pressure coupling for connection to a vessel (not shown) whose internal pressure is to be measured. The diaphragm is held at this coupling end of the case, with a seal 33 between the silicon body and the metal end of the case. The other end of the case, i.e. remote from the coupling, extends beyond the cover plate 25 and is closed by an end cap 34, thereby enclosing a reference chamber 35 which has a much larger volume than that of the cavity. The reference chamber and cavity are linked by thin ports 36. Also within the chamber 35 is a cylindrical spacer 37 which is pressed against the cover plate 25 by the end cap 34, the latter being secured by a retaining ring 38 which screws onto the outside of the case 31. In this way the diaphragm is held in place against the pressure being measured.

An alternative way of securing the diaphragm and cover plate within the case, is to provide the case with internal threading and an externally threaded collar which can itself be screwed against the cover plate. This has the advantage of enabling the case to be free from any protruding retaining ring and like restraints on its shape and configuration, but care is then needed to exert even pressure on the diaphragm. Even quite small pressure differences around the perimiter of the cover plate, and hence around the collar, can distort the very slim cavity.

Also shown through the end plate is an air vent 39. For measuring so called "gauge" pressure, that is where the measurand pressure is compared with the ambient pressure, or where significant temperature changes occur, for example, this vent may be left open. Indeed for such applications the vent may be provided around the optical fibres where they pass through the end cap. However, under stable temperature conditions, the vent may be sealed to eliminate atmospheric contamination of the reflective surfaces of the Fabry Perot cavity.

The optical properties of the sensor were investigated by preparing a number of cavities substantially as described in connection with Figure 2, except that the etched silicon surface of the diaphragm and the opposing surface of the glass cover plate were given various reflectivities by coating with various thickness of aluminium, including bare uncoated surfaces. For simplicity, no protective metal case was used in these experiments. In each experiment the visibility of the fringes was determined according to the definition

$$\text{Visibility} = \frac{I_{max} - I_{min}}{I_{max} + I_{min}}$$

where $I_{max}$ and $I_{min}$ are the maximum and minimum intensities of the fringes in the reflected light. Two particularly relevant results were as follows:

Example 1

In this experiment the etched silicon surface of the diaphragm was left uncoated while the glass cover plate was variously coated.

|  | Reflectivity glass/Al | Reflectivity silicon | Visibility |
|---|---|---|---|
| (a) | 28.5% | 30% | 45% |
| (b) | 67.4% | 30% | 30% |

Example 2

In this experiment the etched silicon surface was coated to a high degree of reflectivity while the glass cover plate was again variously coated.

|  | Reflectivity glass/Al | Reflectivity silicon/Al | Visibility |
|---|---|---|---|
| (a) | 90% | 90% | 5% |
| (b) | 28.5% | 90% | 83% |

QM 33406

## CLAIMS

1.      An optical pressure sensor comprising a resiliently flexible diaphragm and a rigid transparent cover plate mounted substantially parallel to the diaphragm and spaced therefrom by a collar which is integral with one of them and secured against the other, thereby to define between the plate and the diaphragm a cavity bounded by the collar with the diaphragm and the cover plate each having an inner surface within the cavity and an outer surface outside the cavity, the two opposed inner surfaces being reflective thereby to form a reflective Fabry Perot cavity with the transparent cover plate enabling light to enter and escape from the cavity and the sensor being adapted to receive on the outer surface of the diaphragm the fluid whose pressure is to be sensed thereby to cause flexing of the diaphragm and consequential variation in the Fabry Perot interference pattern according to changes in the pressure.

2.      A pressure sensor as claimed in claim 1 wherein the diaphragm is integral with the collar formed around its periphery.

3.      A pressure sensor as claimed in claim 2 wherein the diaphragm and collar are manufactured from a semi-conductor material.

4.      A pressure sensor as claimed in claim 3 wherein the semiconductor material consists essentially of silicon.

5.      A pressure sensor as claimed in claim 3 or claim 4 wherein the inner surface of the diaphragm is a smooth etched semi-conductor surface.

6.    A pressure sensor as claimed in any one of claims 1-4 wherein the inner surface of the cover plate has a reflectivity within the range 30-50%.

7.    A pressure sensor as claimed in claim 6, wherein the inner surface of the diaphragm has a reflectivity within the range 80-95%.

8.    A pressure sensor as claimed in any one of the preceding claims in which the width of the cavity between the inner surfaces of the diaphragm and the cover plate in the absence of any elevated or reduced pressure applied to the diaphragm, lies within the range 0.3-1 micron.

9.    A pressure sensor as claimed in any one of the preceding claims, having a collimating lens adapted to receive light from an optical fibre and to supply it to the cavity through the cover plate.

10.    A pressure sensor as claimed in any one of the preceding claims having a reference chamber of larger volume than the cavity, the reference chamber and the cavity being in fluid communication with each other.

11.    A pressure sensor as claimed in claim 10 wherein the interconnected reference chamber and cavity are sealed against fluid exchange with their environment.

12.    An optical pressure sensing system comprising a light source, a pressure sensor as claimed in any one of the preceding claims, an optical fibre linking the source to the sensor, a detector for one or more selected wavelengths within the light source waveband(s), and an output optical fibre linking the sensor to the detector.

13.   A method of manufacturing a pressure sensor, comprising the steps of providing a diaphragm preform of resilient material, having a first planar surface on one side and a second planar surface on the other, defining a diaphragm portion of the first surface with a collar portion extending around its periphery, etching the first surface to a substantially constant depth throughout its diaphragm portion and providing the etched diaphragm portion with a reflective inner surface, causing the etched diaphragm portion to be of a thickness which is flexible under application of the pressure thereto, providing a transparent cover plate with at least a portion having a reflective surface, securing the collar portion to the cover plate with the two reflective surfaces opposed thereby to form a reflective Fabry Perot cavity with the transparent cover plate enabling light to enter and escape from the cavity, and adapting the sensor to receive the pressure to be sensed on the outer surface of the diaphragm being the diaphragm surface remote from the cavity whereby pressure applied to said outer surface shall cause flexing of the diaphragm and consequential variation in the Fabry Perot interference according to changes in that pressure.

FIG 1

2/2

FIG 2